# EUROPÄISCHE PATENTANMELDUNG

(11) **EP 4 517 931 A1**
(43) Veröffentlichungstag der Anmeldung: **05.03.2025**
(21) Anmeldenummer: 24190997.7
(22) Anmeldetag: 25.07.2024
(51) Int. Cl.: H01M 10/613, H01M 10/625, H01M 10/6556, H01M 10/6568, H01M 50/20

(54) **VORRICHTUNG ZUR ÜBERWACHUNG VON AKKUMULATOREN**

(30) Priorität: 27.07.2023 DE 102023119919
(71) Anmelder: MAHA Maschinenbau Haldenwang GmbH & Co. KG, 87490 Haldenwang (DE)
(72) Erfinder: Geigle, Peter, 87435 Kempten (DE)
(74) Vertreter: MERH-IP Matias Erny Reichl Hoffmann Patentanwälte PartG mbB

(57) **Zusammenfassung**

Vorrichtung zur Überwachung eines Akkumulators, der mit einem Kühlmittel gekühlt wird und in einem Akkumulatorgehäuse angeordnet ist, das zumindest einen Kühlmittelzulaufanschluss und einen Kühlmittelrücklaufanschluss aufweist, die Überwachungsvorrichtung 100 umfassend ein Gehäuse 101, einen Kühlmittelkreislauf mit Leitungen zum Transportieren des Kühlmittels, zumindest einem Temperatursensor 3 und zumindest eine Steuereinrichtung 4, wobei der Temperatursensor derart angeordnet ist, dass er die Kühlmitteltemperatur des aus dem Akkumulator 200 herauslaufenden Kühlmittels erfasst, und die Steuereinrichtung 4 dazu eingerichtet ist, eine Warnmeldung basierend auf der von dem Temperatursensor 3 gemessenen Kühlmitteltemperatur auszugeben, falls die Kühlmitteltemperatur außerhalb eines vordefinierten Temperaturbereiches liegt.

## Beschreibung

Die vorliegende Patentanmeldung betrifft eine Vorrichtung zur Überwachung von Akkumulatoren. Die Vorrichtung ermöglicht es, insbesondere Kraftfahrzeugakkumulatoren im Hinblick auf ihr Temperaturverhalten zu überwachen.

Mit einer zunehmenden Anzahl elektrischer Kraftfahrzeuge, die elektrische Energie in Akkumulatoren speichern, wird es immer wichtiger, Wartungs- und Sicherheitskonzepte für solche Kraftfahrzeuge bereitzustellen. Insbesondere die im Moment häufig verwendeten Li-lonen-Akkumulatoren haben beispielsweise den Nachteil, dass sie sich selbst entzünden können und solche Brände nur schwierig löschbar sind. Diese Brandgefahr macht den Umgang mit elektrischen Kraftfahrzeugen bei Prüf- und Reparaturvorgängen schwieriger, auch weil in solchen Situation die kraftfahrzeugseitige Temperaturregelung der Akkumulatoren meist nicht betrieben werden kann. Ebenfalls können Akkumulatoren von stillgelegten Kraftfahrzeugen oder aus dem Kraftfahrzeug ausgebaute Akkumulatoren im Hinblick auf die Brandgefahr kritisch sein. In all diesen Fällen und auch in weiteren vergleichbaren Situationen kann es zu einer Überhitzung und Entzündung der Akkumulatoren kommen, da in diesen Situationen die im Fahrzeug während des Fahrbetriebs bereitgestellte Kühlung bzw. Temperaturregelung nicht aktiv bzw. nicht aktivierbar ist.

Im Hinblick auf die Lagerung und den Transport von brandgefährdeten Akkumulatoren oder generell den Nicht-Betriebszustand von Kraftfahrzeugen mit solchen Akkumulatoren gibt es Bedarf, Brandrisiken so gut wie möglich zu reduzieren.

Daher ist es wünschenswert zumindest eine Vorrichtung bereitzustellen, die eine automatisierte und zuverlässige Überwachung von Akkumulatoren ermöglicht. Diese Aufgabe wird von den beigefügten Patentansprüchen gelöst.

Die nachfolgend beschriebene Vorrichtung erzielt den technischen Vorteil, eine technisch wenig komplexe und sicherheitsbedeutsame Möglichkeit anzubieten, einen Akkumulator, der nicht an eine aktive Kühlung angeschlossen ist, zu überwachen und eine Brandgefahr bzw. Überhitzungsgefahr zu melden. Der angeschlossene Kühlmittelkreislauf der Vorrichtung kann ferner als Überbrückungs-/Ersatzkühlung herangezogen werden, so dass der Akkumulator beispielsweise auch bei der Lagerung oder dem Transport temperaturgeregelt betrieben werden kann.

Gemäß einem ersten Aspekt wird eine Vorrichtung zur Überwachung (Überwachungsvorrichtung) eines Akkumulators beschrieben. Der Akkumulator ist bevorzugt kühlmittelgekühlt und in einem Akkumulatorgehäuse angeordnet, wobei das Akkumulatorgehäuse zumindest einen Kühlmittelzulaufanschluss und einen Kühlmittelrücklaufanschluss aufweisen kann. Es ist zu beachten, dass der Begriff Akkumulator hier chemische Energiespeicher, wie Batterien oder Akkumulatoren, umfassen soll. Der Akkumulator kann eine oder bevorzugt eine Vielzahl von Akkumulator-/Batteriezellen aufweisen. Der Akkumulator ist innerhalb des Akkumulatorgehäuses angeordnet und wird von einer Kühlflüssigkeit umspült oder von Kühlkanälen mit Kühlflüssigkeit umgeben, um den Akkumulator zu kühlen. Bevorzugt ist der Akkumulator ein Li-Ionen Akkumulator.

Insbesondere sind die Akkumulatoren, die an die hier vorgestellte Überwachungsvorrichtung angeschlossen werden, nicht elektrisch aktiv, d.h. sie werden weder aktiv geladen noch aktiv entladen bzw. geben aktiv Nutzenergie ab. Dies kann beispielsweise bei einem Lagern, dem Transport oder bei defekten Akkumulatoren oder dergleichen der Fall sein.

Die Überwachungsvorrichtung umfasst ein Gehäuse, einen Kühlmittelkreislauf mit Leitungen zum Transportieren eines Kühlmittels, bevorzugt zumindest eine Kühlmittelpumpe, zumindest einen Temperatursensor und zumindest eine Steuereinrichtung. Bei dem Kühlmittel kann es sich beispielsweise um ein Wasser-Glykol-Gemisch mit einem Anteil von 30% bis 50% Glykol handeln. Andere Mischungsverhältnisse oder andere Kühlmittel sind ebenfalls als hier offenbart anzusehen, solange diese für den Fachmann naheliegend sind. Die vorgenannten Komponenten der Überwachungsvorrichtung und in weiteren Ausführungsformen weitere Komponenten sind besonders bevorzugt (alle) in das Gehäuse integriert, so dass eine kompakte und mobile Vorrichtung bereitgestellt werden kann.

Das Gehäuse kann zumindest einen Kühlmittelausgang-Gehäuseanschluss zum Verbinden der Kühlmittelleitungen des Kühlmittelkreislaufes mit einem Kühlmittelzulaufanschluss des Akkumulators und einen Kühlmitteleingang-Gehäuseanschluss zum Verbinden der Kühlmittelleitungen des Kühlmittelkreislaufes mit einem Kühlmittelrücklaufanschluss des Akkumulators aufweisen. Diese optionalen Gehäuseanschlüsse können derart am Gehäuse angeordnet sein, dass Kühlmittelleitungen oder fluidische Ausgänge des Akkumulatorgehäuses schnell und fluidisch dicht mit den Leitungen innerhalb der Überwachungsvorrichtung verbindbar sein können. Hierzu können vorbekannte mechanische Form- und/oder Kraftschlussverbindungsmöglichkeiten, wie beispielsweise Adapter, genutzt werden und besonders bevorzugt solche, die ohne Werkzeug montierbar bzw. feststellbar sind. Ebenfalls können Kühlmitteleingang und - ausgang mit flexiblen Leitungen aus dem Gehäuse herausragen und klemmend mit den Ausgängen/Eingängen eines Akkumulatorgehäuses bzw. dessen Kühlleitungen verbindbar sein.

Ferner ist der Temperatursensor derart angeordnet ist, dass er die Kühlmitteltemperatur des aus dem Akkumulator austretenden/ausfließenden Kühlmittels erfassen kann. Der Temperatursensor kann jegliche für den Fachmann naheliegenden Temperaturmessmittel umfassen und ist auch nicht strikt auf einen Sensor im Wortsinne zu begrenzen, so dass auch optische Temperaturmessverfahren, die einen Bereich einer Leitung anvisieren, z.B. per Laserstrahl oder dgl., als Temperatursensor im Sinne der hier vorliegenden Offenbarung angesehen werden.

Außerdem ist die Steuereinrichtung dazu eingerichtet, eine Warnmeldung basierend auf der von dem Temperatursensor gemessenen Kühlmitteltemperatur auszugeben, wenn die Kühlmitteltemperatur außerhalb eines vordefinierten Temperaturbereiches liegt bzw. falls der Temperatursensor eine Kühlmitteltemperatur außerhalb eines vordefinierten Temperaturbereiches erfasst.

Der vordefinierte Temperaturbereich kann in einem für den jeweiligen Akkumulatortyp optimalen und brandgefahrreduzierenden Bereich liegen, beispielsweise zwischen 0°C und 40 °C, zwischen -5°C und 60 °C in jedem Zwischenbereich dazu, zwischen Raumtemperatur und einer Maximaltemperatur, wie beispielsweise 30°C, 40°C, 50°C, 60°C oder dgl.

Statt einer Warnung bei einem Herausfallen aus dem vordefinierten Temperaturbereich kann die Steuereinrichtung bevorzugt auch lediglich das Überschreiten der Maximaltemperatur mittels einer Warnmeldung anzeigen. Dabei kann eine Warnmeldung von der Steuereinrichtung per kabelgebundenem oder kabellosen Signal z.B. an eine Anzeige übertragen werden, die die Warnung dann visuell anzeigt. Alternativ oder zusätzlich kann die Warnung auch akustisch als Warnton ausgegeben werden, eine Signallampe aktiviert werden oder dgl.

Ferner kann die Steuereinrichtung eine Warnmeldung ausgeben, falls die Kühlmitteltemperatur oberhalb und/oder unterhalb des vordefinierten Temperaturbereiches liegt. Besonders praxisbevorzugt im Hinblick auf das Vermeiden von Bränden und Selbstüberhitzung ist dabei das Überwachen und Melden des Überschreitens einer Maximaltemperatur, wie oben bereits besprochen.

Ferner kann die Steuereinrichtung eine Warnmeldung ausgeben, falls die Kühlmitteltemperatur für zumindest zwei hintereinander folgenden Temperaturmesswerten oberhalb und/oder unterhalb des vordefinierten Temperaturbereiches liegt. Diese Modifikation ist insbesondere dahingehend technisch vorteilhaft, dass eine gewisse voreinstellbare Sensitivität vorgegeben wird, d.h. nicht jede möglicherweise minimale Maximaltemperaturüberschreitung bereits zu einem Alarm führt, sondern nur wenn dies mehrmals hintereinander bei Messwerten oder in anderen vorgegeben Temperaturmustern der Fall ist.

Ferner kann die Steuereinrichtung eine Warnmeldung ausgeben, falls die Kühlmitteltemperatur für zumindest eine vorbestimmte Zeitdauer, z.B. mehrere Sekunden oder wenige Minuten, oberhalb und/oder unterhalb des vordefinierten Temperaturbereiches liegt. Diese Modifikation kann auch mit der obigen kombiniert werden und ist ebenfalls insbesondere dahingehend technisch vorteilhaft, dass eine voreinstellbare Sensitivität vorgegeben wird, d.h. nicht jede möglicherweise minimale oder kurze Maximaltemperaturüberschreitung bereits zu einem Alarm führt.

Ferner kann der Kühlmittelkreislauf innerhalb des Gehäuses der Vorrichtung angeordnet sein, und bevorzugt vollständig innerhalb des Gehäuses. Ganz besonders bevorzugt sind alle Komponenten der Überwachungsvorrichtung, die nicht aus Bedienungsgründen (z.B. Anzeigeeinheit) oder technischen Gründen (z.B. Gehäuseanschlüsse, Stromanschlüsse, Füllstutzen, Lüftungsöffnungen und dgl.) außerhalb des Gehäuses und/oder außen am Gehäuse angeordnet sein müssen, innerhalb dessen angeordnet. Wie bereits oben beschrieben wird dadurch eine kompakte und mobile Einheit ermöglicht.

Die Anordnung der Kühlkreiselemente kann bevorzugt in der Reihenfolge Kühlmitteleingang-Gehäuseanschluss, Temperatursensor, Pumpe, Kühlmittelausgang-Gehäuseanschluss erfolgen, wobei diese Reihenfolge nicht ausschließt, dass weitere Zwischenelemente vorgesehen sein können oder dass eine oder mehrere der genannten Komponenten mehrfach vorgesehen sind oder weggelassen sind.

Die genannten Bauteile sind fluidisch miteinander verbunden, beispielsweise mittels Kühlmittelleitungen zwischen den Bauteilen. Fluidisch verbunden soll dabei insbesondere bedeuten, dass ein Fluid von der einen zu der anderen Verbindungsstelle geleitet werden kann, bevorzugt so, dass es nicht in die Umgebung austritt, sondern gelenkt und reproduzierbar von einem Bauteil zum anderen fließt.

Bevorzugt kann der Temperatursensor zumindest teilweise innerhalb einer Kühlmittelleitung angeordnet sein oder zumindest teilweise innerhalb eines Kühlmittelzulaufes des Wärmetauschers angeordnet sein. Teilweise soll hier insbesondere bedeuteten, dass ein Teil des Temperatursensors entsprechend angeordnet ist, wobei dieser Teil zumindest den Abschnitt des Temperatursensors umfassen soll, der für die Temperaturmessung zuständig ist.

Falls der Temperatursensor nicht innerhalb der Kühlmittelleitung oder des Kühlmittelzulaufes angeordnet sein sollte, so kann dieser auch außerhalb angeordnet sein, wobei hier in der Steuereinrichtung optimalerweise noch eine Temperaturkorrektur vorgenommen wird, die den Wärmeleitwiderstand der Kühlmittelleitung berücksichtigt. In einem technisch wenig aufwendigen Szenario kann die außen an der Kühlmittelleitung oder dem Kühlmittelzulauf gemessene Temperatur durch einen in einer vorgespeicherten und vorermittelten Temperaturtabelle festgehaltenen Korrekturwert abgeändert werden. Die Temperaturtabelle kann beispielsweise Korrekturwerte für verschiedene Einbauorte, Umgebungs- bzw. Gehäuseinnentemperaturen und dgl. angeben.

Die derartige Erfassung der Kühlmitteltemperatur ist höchst präzise und zuverlässig, so dass damit auch die Steuereinrichtung zuverlässig eine Warnmeldung ausgeben kann. Der bauliche Aufwand für das Einbringen eines Temperatursensors ist hingegen relativ gering, so dass die Komplexität der Vorrichtung nicht unnötig erhöht wird.

Falls jedoch alternative Temperaturmessorte oder -verfahren genutzt werden sollen, ist dies prinzipiell ebenfalls von dieser Offenbarung abgedeckt, zumindest soweit für den Fachmann naheliegend.

Ferner kann der Kühlmittelkreislauf zumindest einen Wärmetauscher umfassen, der auf einer Primärseite von dem Kühlmittel durchströmt ist. Mittels des Wärmetauschers kann Wärme aus dem Kühlmittelkreislauf abgeführt oder diesem zugeführt werden. Bevorzugt dient der Wärmetauscher der Abfuhr von Wärme aus dem Kühlmittelkreislauf. Ferner kann der Kühlmittelkreislauf einen Ausgleichsbehälter für Kühlmittel aufweisen, in den Kühlmittel aus dem Kühlmittelkreislauf eingespeist werden kann oder Kühlmittel von dem Ausgleichbehälter in den Kühlmittelkreislauf eingespeist werden kann. Bevorzugt ist dieser Ausgleichsbehälter zwischen dem Wärmetauscher und der Pumpe angeordnet und wird ebenfalls über die Steuereinrichtung gesteuert. So kann die Kühlmittelmenge, die dem Kühlmittelkreislauf verfügbar ist, aktiv gesteuert werden; und zwar in vorbekannter Art und Weise durch die Steuereinrichtung. Die Steuerung der Kühlmittelmenge erlaubt es u.a., weite Kühlbereiche/Kühlleistungsbereiche energieeffizient abzudecken.

Ferner kann der Wärmetauscher auf einer Sekundärseite eine Temperiereinrichtung aufweisen, die von der Steuereinrichtung ansteuerbar sein kann.

Die Temperiereinrichtung kann ein Gebläse und/oder einen oder mehrere Kältekreisläufe umfassen. Jede andere Einrichtung, die es erlaubt, die Kühlleistung des Wärmetauschers zu erhöhen bzw. zu vermindern, d.h. zu verändern, ist ebenfalls von dieser Offenbarung erfasst.

Der Kältekreislauf kann insbesondere einen Verdampfer, einen Kompressor, einen Kondensator sowie ein Expansionsventil enthalten. In dem Kältekreislauf kann ein Kältemittel zirkulieren. Der Verdampfer kann die Sekundärseite des Wärmetauschers bilden und dem Kühlmittel auf der Primärseite des Wärmetauschers Wärme entziehen. Der Kältekreislauf kann dabei dazu eingerichtet sein, Wärme mit einer Umgebung oder mit einem weiteren Kühlmittelkreislauf auszutauschen. In dem ersten Fall kann der Kondensator des Kältekreislaufs die mittels des Verdampfers aufgenommene Wärme an die Umgebungsluft abgeben, während in dem zweiten Fall der Kondensator die aufgenommene Wärme an ein Kühlmittel in einem weiteren Kühlmittelkreis abgeben kann. Es ist bevorzugt auch möglich, dass der Kältekreislauf umkehrbar ist, d.h. es kann der Kondensator als Verdampfer und der Verdampfer als Kondensator eingesetzt werden, so dass der Kältekreislauf auch Wärme aus der Umgebung bzw. aus dem weiteren Kühlmittelkreislauf aufnehmen kann, die dem Kühlmittelkreis der Batterie über den Wärmetauscher zugeführt werden kann.

Bevorzugt kann die Steuereinrichtung basierend auf den Kühlmitteltemperaturmesswerten, die Temperiereinrichtung derart ansteuern, dass die Kühlmitteltemperatur verändert werden kann.

Wird ein Gebläse als Temperiereinrichtung genutzt, so kann beispielsweise die Rotationsgeschwindigkeit des Gebläses, das einen Luftstrom zu dem Wärmetauscher leitet, dazu verwendet werden, die Wärmeabgabe des Kühlmittels in dem Wärmetauschers zu verändern. Im Falle eines Kältekreislaufes kann beispielsweise über das Expansionsventil die Menge des zu verdampfenden Kältemittels eingestellt und darüber die Wärmeabgabe des Kühlmittels im Wärmetauschers variiert werden.

Die Steuereinrichtung kann somit die Kühlmitteltemperatur aktiv steuern und insbesondere reduzieren, wenn diese die vorgesehene Maximaltemperatur übersteigt oder in die Nähe dieser kommt. Grundsätzlich ist es aufgrund der aktiven Temperaturregelung auch möglich, ein zweistufiges Sicherheitsverfahren zu implementieren, das bis zu der Schwelle der Maximaltemperatur lediglich kühlmitteltemperatursenkend arbeitet und, falls die Kühlmitteltemperatur dennoch die Maximaltemperatur überschreiten sollte, eine Warnung ausgeben kann.

Andere aktive Kühleinrichtungsmöglichkeiten sind ebenfalls hier einsetzbar und soweit für den Fachmann als naheliegend erkennbar; beispielsweise die Bereitstellung eines zweiten Kühlmittelkreislaufs mit Schnittpunkt am Wärmetauscher anstelle des Kältekreislaufs.

Die hier offenbarte Vorrichtung kann eine Anzeigevorrichtung/Anzeigeeinheit, z.B. einen Bildschirm aufweisen, der eine Warnmeldung anzeigen kann. Ferner kann die Anzeigevorrichtung eine Datenschnittstelle aufweisen, um diese mit einer weiteren externen Vorrichtung, beispielsweise einem Computer zu verbinden, der dann die Warnmeldung ausgibt, oder diese mit einer anderen Warnausgabevorrichtung verbindet. Die Anzeigevorrichtung kann auch selbst ein kompakter Computer mit Anzeigemodul sein, die in das Gehäuse integriert ist oder daran befestigt ist.

Ferner kann die Vorrichtung eine Anzeigeeinheit aufweisen, die an dem Gehäuse angeordnet sein kann. Die Anzeigeeinheit kann beispielsweise außen an dem Gehäuse montiert sein, optional auch abnehmbar, bspw. als tragbarer (Tablet-)Computer oder dgl., oder diese kann auch mit dem Gehäuse integriert sein, so dass nur deren Bildschirm-/Anzeigebereich von außen sichtbar ist. Die Anzeigeeinheit kann dazu eingerichtet sein, die Warnmeldung der Steuereinrichtung auszugeben. Vorteilhaft ist, dass somit eine mobile "stand-alone" Lösung angeboten werden kann, die damit eine zuverlässige Überwachung und Warnung ermöglicht.

Ferner kann die Vorrichtung eine Anzeigeeinheit aufweisen, optional wie oben beschrieben oder auch in anderer Art und Weise, wobei diese einen Touch-Bildschirm aufweisen kann, der dazu eingerichtet sein kann, die Vorrichtung zu konfigurieren. Die entsprechende Einrichtung kann beispielsweise dadurch erzielt werden, dass eine Software, die von der Steuereinrichtung bzw. einem Prozessor/ASIC der Steuereinrichtung oder von einem Prozessor/ASIC der Anzeigeeinheit ausgeführt wird und in einem entsprechenden Speichermodul der Steuereinheit oder der Anzeigeeinheit gespeichert sein kann, eine Benutzeroberfläche auf dem Touch-Bildschirm anzeigt, in der der Nutzer optional auch eine softwarebasierte Tastatur eingeblendet bekommen kann. Über diesen Touch-Bildschirm kann der Nutzer dann bevorzugt nutzergeführt von der Benutzeroberfläche Angaben zu der Art des angeschlossenen Akkumulators machen, zu dessen Leistung, zu dessen Ladeumfang und/oder zu dem zu überwachenden Temperaturbereich oder der Maximaltemperatur. Eine solche nutzergeführte Konfiguration erlaubt es die Überwachung nicht nur höchst zuverlässig, sondern auch anpassbar für verschiedene Akkumulatortypen und Situation zu gestalten.

Zusätzlich oder alternativ kann die Vorrichtung auch eine Anzeigeeinheit und ein Eingabemittel aufweisen, über die die Vorrichtung konfiguriert werden kann. Die Eingabemittel können eine in das Gehäuse integrierte Hardwaretastatur umfassen, sowie Bedienknöpfe, Schalter oder dgl. Beispielsweise kann die oben beispielhaft beschriebene Konfiguration anstatt über das Touch-Display auch über Bedienschalter, Drehräder, oder die Hardwaretastatur erfolgen.

Alternativ oder zusätzlich zu den oben beschrieben Möglichkeiten kann die Überwachungsvorrichtung auch mit einem Computer/Rechner verbunden sein und Daten mittels einer kabelgebundenen und/oder kabellosen Verbindung mit dem einen oder mehreren Computern austauschen. Wie erwähnt, kann dies eine kombinatorische Ergänzung zu den vorbeschrienen Anzeigevorrichtungs/-einheit-Optionen darstellen oder eine ersetzende Alternative. Falls eine kabelgebundene Verbindung herstellbar sein soll, wird bevorzugt ein physischer Steckeranschluss für ein Datenkabel in bzw. an dem Gehäuse angeordnet. Im Gehäuseinneren kann eine Kabelverbindung von diesem Steckeranschluss zu der Steuereinrichtung und/oder der Anzeigeeinheit/-vorrichtung vorliegen. Falls bevorzugt eine kabellose Verbindung herstellbar sein soll, so kann die Anzeigevorrichtung und/oder die Steuereinrichtung eine Einheit zum Senden und Empfangen von Daten aufweisen, um Daten zwischen der Anzeigevorrichtung bzw. der Steuereinrichtung und einem oder mehreren mobilen Computern, auch umfassend Smartphones, Tabletcomputer, etc., und/oder einem oder mehreren ortsfesten Computern, u.a. ein PC oder Server, in bekannter Weise per Funkübertragung übertragen kann. Insbesondere eine Funkverbindung zwischen einem Computer und einem oder mehreren Überwachungsvorrichtungen erlaubt es besonders vorteilhaft, dass Warnmeldungen an einem zentralen und auch entfernten Ort (auch zusätzlich zu solchen an der Anzeigeeinheit der Vorrichtung selbst, falls vorliegend) ausgegeben werden können sowie Eingaben und Steuerungsbefehle zentral von der Ferne aus vornehmbar sind. So können auch größere Verbünde von Überwachungsvorrichtungen überwacht und gesteuert werden.

Ferner kann das Gehäuse einen elektrischen Stromanschluss für die elektrische Versorgung der Steuerung und des Kühlmittelkreislaufes aufweisen, so dass eine elektrische Stromversorgung bereit gestellt werden kann. Alternativ oder zusätzlich kann, bevorzugt innerhalb des Gehäuses, auch ein Vorrichtungsakkumulator vorgesehen sein, der den Kühlmittelkreislauf und die Steuereinrichtung inklusive der Warnmeldungsausgabe mit elektrischer Energie versorgen kann. Bei dieser Option wird eine stromnetzautarke technische Möglichkeit für die Überwachung des extern angeschlossenen Akkumulators geboten.

Ferner kann das Gehäuse Fahrrollen zum leichteren Verschieben/Verfahren und/oder Transportanschlüsse, wie Haken, Ösen und/oder Griffe usw. aufweisen, an denen das Gehäuse leicht angehoben werden kann. Dies erlaubt es, das Gehäuse ohne größeren Aufwand beliebig zu positionieren oder zu transportieren, was die Mobilität weiter erhöht.

Ferner kann der bevorzugte Kühlmitteleingang-Gehäuseanschluss und der bevorzugte Kühlmittelausgang-Gehäuseanschluss mit flexiblen oder starren Verbindungsleitungen verbindbar sein und die Verbindungsleitungen Adapter für den Anschluss an den Kühlmittelzulaufanschluss und den Kühlmittelrücklaufanschluss aufweisen. Dies ermöglicht eine universelle Verbindbarkeit mit verschiedenen Akkumulatorgehäusen, wobei beispielsweise lediglich die Adapter ausgetauscht werden müssen, falls Adapter notwendig sein sollten und die Verbindungsleiten nicht direkt anschließbar sein sollten.

Besonders bevorzugt können auch mehr als ein Kühlmitteleingang-Gehäuseanschluss und mehr als ein Kühlmittelausgang-Gehäuseanschluss an dem Gehäuse angeordnet sein, so dass an eine Überwachungsvorrichtung mehrere Akkumulatoren anschließbar und somit zumindest verbundweise überwachbar sind. Fluidisch können die mehreren Akkumulatoren in Reihe oder parallel zueinander an die Überwachungsvorrichtung angeschlossen werden. Falls ein einzelner Temperatursensor innerhalb des Gehäuses der Überwachungsvorrichtung angeordnet sein sollte, so wäre hiermit zumindest eine Verbundstemperatur der zusammengeschalteten Akkumulatoren überwachbar. Alternativ, um die Genauigkeit weiter zu erhöhen, wäre es ferner auch möglich, dass die Überwachungsvorrichtung mehr als einen Temperatursensor aufweist: Hier wäre es bevorzugt, dass Temperatursensoren außerhalb des Gehäuses der Überwachungsvorrichtung jeweils an dem Kühlmittelausgang jedes Akkumulator(gehäuses) lösbar anbringbar sind und diese Temperatursensor entweder per Funk oder kabelgebunden die Messwerte an die Steuereinrichtung weitergeben.

Zudem wird hier ein Überwachungs- und Kühlsystem gemäß einem Aspekt der Offenbarung vorgestellt, das eine Vorrichtung gemäß zumindest einem der voranstehenden Aspekte und Modifikationen und einen kühlmittelgekühlten Akkumulator umfassen kann. Der Akkumulator kann in einem Akkumulatorgehäuse angeordnet sein, das zumindest einen Kühlmittelzulaufanschluss und einen Kühlmittelrücklaufanschluss aufweist, wobei der Kühlmittelzulaufanschluss des Akkumulators fluidisch mit dem optionalen Kühlmittelausgang-Gehäuseanschluss der Vorrichtung verbunden ist und der Kühlmittelrücklaufanschluss des Akkumulators fluidisch mit dem optionalen Kühlmitteleingang-Gehäuseanschluss der Vorrichtung verbunden werden kann/ist.

Der Akkumulator ist bevorzugt ein Akkumulator eines Kraftfahrzeuges, das nicht im Fahrbetrieb ist. Der Akkumulator kann bereits aus dem Kraftfahrzeug ausgebaut sein oder er kann auch (noch) innerhalb des Kraftfahrzeuges, das beispielsweise gelagert oder transportiert wird, sein, wobei im letztgenannten Fall die Verbindungsleitungen nur entsprechend länger gewählt werden, um die Vorrichtung zur Überwachung mit dem Akkumulator in dem Fahrzeug zu verbinden.

### Figurenbeschreibung

Im Folgenden wird der hier vorgestellte Gegenstand anhand bevorzugter Beispiele unter Bezugnahme auf die beigefügten Figuren näher erläutert. In den Figuren sind gleiche Elemente mit gleichen Bezugszeichen versehen. Daher wird gegebenenfalls auf eine wiederholende Beschreibung verzichtet.

### Kurzbeschreibung

Figuren 1a - 1c zeigen schematisch eine perspektivische Ansicht einer Überwachungsvorrichtung gemäß einem Ausführungsbeispiel des hier vorgestellten Gegenstands sowie einen darin enthaltenen Kühlmittelkreislauf;
Figur 2 zeigt schematisch einen Hydraulikplan des in den Figuren 1b und 1c gezeigten Kühlmittelkreislaufs;
Figur 3 zeigt schematisch einen Hydraulikplan eines Kühlmittelkreislaufs gemäß einem weiteren Ausführungsbeispiel der vorgestellten Überwachungsvorrichtung;
Figur 4 zeigt schematisch einen Hydraulikplan eines Kühlmittelkreislaufs gemäß einem weiteren Ausführungsbeispiel der vorgestellten Überwachungsvorrichtung;
Figur 5 zeigt schematisch einen Hydraulikplan eines Kühlmittelkreislaufs gemäß einem weiteren Ausführungsbeispiel der vorgestellten Überwachungsvorrichtung; und
Figuren 6a und 6b zeigen schematisch den Kühlmittelkreislauf gemäß dem in Figur 6 gezeigten Hydraulikplan in einer perspektivischen Ansicht.

### Ausführliche Beschreibung der Figuren

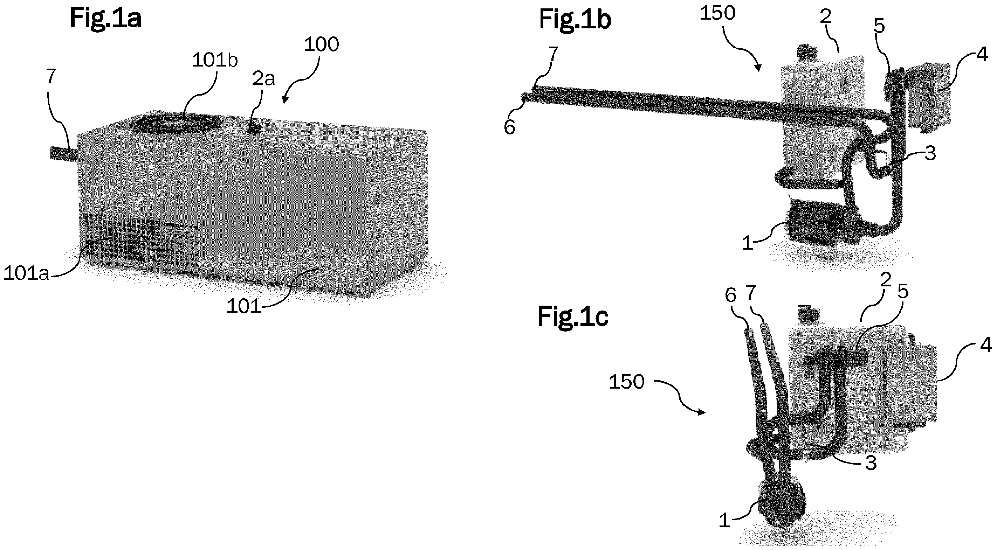

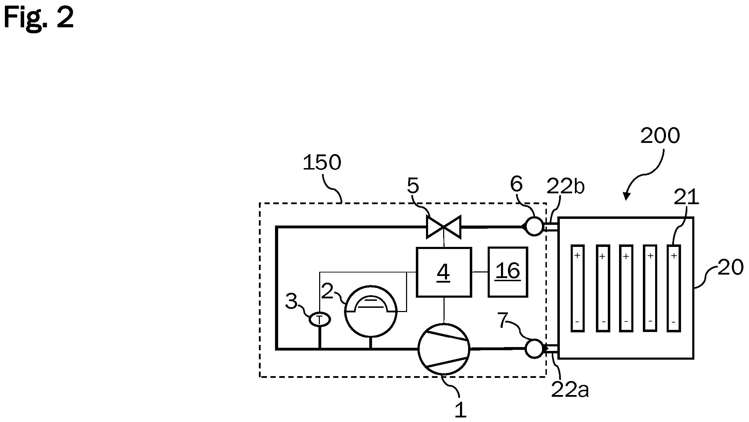

Die Figur 1a zeigt schematisch eine perspektivische Ansicht einer Überwachungsvorrichtung 100 (Vorrichtung zur Überwachung) gemäß einem Ausführungsbeispiel des hier vorgestellten Gegenstands. Die Überwachungsvorrichtung 100 weist ein Gehäuse 101 auf, in dem ein Kühlmittelkreislauf 150 (siehe Fig. 1b, 1c) angeordnet ist. An dem Gehäuse sind nicht näher dargestellte Gehäuseanschlüsse (Kühlmitteleingang-, Kühlmittelausgang-) angebracht, die einen Kühlmitteleingang 6 und einen Kühlmittelausgang 7 bilden oder mit dem gezeigten Kühlmitteleingang 6 und Kühlmittelausgang 7 verbindbar sind. Insbesondere können die Gehäuseanschlüsse als Stutzen oder Adapter mit einem Durchmesser in einem je nach Leistung erforderlichen Bereich versehen sein. Beispielhafte Durchmesser können 14 mm bis 20 mm (14 mm, 16 mm, 18 mm, 20 mm) umfassen, wobei auch davon abweichende Durchmesser eingesetzt werden können. Die Gehäuseanschlüsse können mit flexiblen oder starren Verbindungsleitungen oder dgl. mit einem Akkumulator 200 (siehe Fig. 2) verbindbar sein und Adapter zum Anschließen an Kühlmittelanschlüsse 22a, 22b verschiedener Akkumulatoren 200 aufweisen. Dies ermöglicht eine universelle Verbindbarkeit mit verschiedenen Akkumulatorgehäusen (schematisch in den Figuren 2-5 dargestellt), so dass beispielsweise lediglich die Adapter ausgetauscht werden müssen, falls die Verbindungsleitungen nicht direkt anschließbar sein sollten. Die nicht näher gezeigten Gehäuseanschlüsse bzw. Adapter können auch (abnehmbare bzw. austauschbare) Verzweigungen umfassen, so dass mehr als ein Akkumulator 200 mit der Überwachungsvorrichtung 100 verbindbar sein kann.

Des Weiteren ist an dem Gehäuse 101 ein Einfüllstutzen 2a für einen Ausgleichsbehälter 2 (siehe Fig. 1b, 1c) angeschlossen, der es ermöglicht, den Kühlmittelkreislauf 150 über den Ausgleichsbehälter 2 mit Kühlmittel zu befüllen, ohne dass das Gehäuse 101 geöffnet werden müsste. Die Fig. 1a zeigt besonders eindrücklich, wie kompakt die Überwachungsvorrichtung ausgeführt sein kann und wie (die meisten) Komponenten im Gehäuseinneren untergebracht sind.

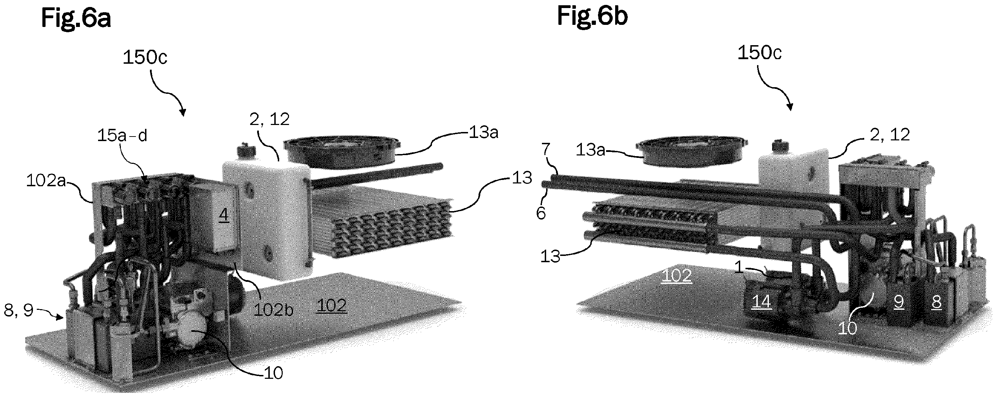

In dem Gehäuse 101 sind außerdem eine Gebläseöffnung 101a und ein Lüftungsgitter 101b integriert, die einen Austausch der Luft im Inneren des Gehäuses 101 ermöglichen. Über die Gebläseöffnung 101a kann ein Gebläse 13a (siehe Fig. 6a, 6b) Luft aus der Umgebung ansaugen, welche einen Wärmetauscher 13 (siehe Fig. 6a, 6b) umströmen und durch das Lüftungsgitter 101b wieder aus dem Gehäuse 101 der Überwachungsvorrichtung 100 austreten kann.

An dem Gehäuse 101 kann zusätzlich eine Anzeigevorrichtung mit einer Anzeigeeinheit 16 (siehe Fig. 2) angeordnet sein, die beispielsweise an einer der äußern Gehäuseflächen abnehmbar montiert sein kann. Mittels der Anzeigeeinheit 16 kann ein Warnsignal der Überwachungsvorrichtung 100 ausgegeben werden. Die Anzeigeeinheit 16 kann als Touch-Bildschirm ausgeführt sein, über den die Überwachungsvorrichtung 100 zusätzlich konfiguriert werden kann. Über diesen Touch-Bildschirm kann ein Nutzer beispielsweise geführt von einer Benutzeroberfläche Angaben zu der Art des angeschlossenen Akkumulators machen, (Leistung, Ladeumfang, zu überwachenden Temperaturbereich und/oder Maximaltemperatur).

Zusätzlich oder alternativ kann die Vorrichtung 100 weitere Eingabemittel (nicht dargestellt) aufweisen, mit denen diese konfiguriert werden kann. Die Eingabemittel können beispielsweise eine in das Gehäuse 101 integrierte Hardwaretastatur umfassen, sowie Bedienknöpfe, Schalter, Drehräder oder dergleichen. Beispielsweise kann die oben beispielhaft beschriebene Konfiguration anstatt über das Touch-Display auch über diese zusätzlichen Eingabemittel erfolgen. Alternativ oder zusätzlich kann auch eine nicht dargestellte Funk- oder Kabelverbindung zu einem externen Rechner oder mobilen Recheneinheit hergestellt werden, so dass die Anzeige bzw. Warnausgabe und Bedienung/Eingabe remote durchgeführt werden kann.

Das Gehäuse 101 kann außerdem einen elektrischen Stromanschluss (nicht dargestellt) zur elektrischen Versorgung seiner Steuereinrichtung 4 (siehe Fig. 1b, 1c) und des Kühlmittelkreislaufs 150 aufweisen. Alternativ oder zusätzlich kann, bevorzugt innerhalb des Gehäuses 101, auch ein Vorrichtungsakkumulator (nicht dargestellt) vorgesehen sein, der den Kühlmittelkreislauf 150 und die Steuereinrichtung 4 einschließlich der Anzeigeeinheit mit elektrischer Energie versorgen kann.

Ferner können an dem Gehäuse 101 Fahrrollen (nicht dargestellt) zum Verschieben/Verfahren und/oder Transportanschlüsse, wie Haken, Ösen und/oder Griffe usw. (nicht dargestellt) angebracht sein, an denen das Gehäuse 101 bzw. die gesamte Überwachungsvorrichtung 100 angehoben werden kann. Dies erlaubt es, das Gehäuse 101 einfach abzunehmen und/oder die Überwachungsvorrichtung 100 ohne größeren Aufwand beliebig zu positionieren oder zu transportieren.

Die Figuren 1b und 1c zeigen den Kühlmittelkreislauf 150 der in Figur 1a gezeigten Überwachungsvorrichtung 100 in verschiedenen perspektivischen Ansichten. Figur 1b stellt den Kühlmittelkreislauf in der gleichen Ansicht wie die in Figur 1a gezeigte Überwachungsvorrichtung 100 dar. Figur 1c zeigt eine Rückansicht des Kühlmittelkreislaufs 150.

Der Kühlmittelkreislauf 150 umfasst bspw. einen Kühlmitteleingang 6, der an einen Kühlmittelrücklaufanschluss 22b eines nicht im Betrieb befindlichen Akkumulators 200 (siehe Fig. 2) angeschlossen werden kann oder der mit einem nicht gezeigten Kühlmitteleingang-Gehäuseanschluss verbunden sein kann und über diesen an den Kühlmittelrücklaufanschluss 22b anschließbar sein kann. Ferner umfasst der Kühlmittelkreislaufs 150 bspw. ein Ventil 5, mit dem der Kühlmitteleingang 6 geöffnet und geschlossen werden kann, einen Temperatursensor 3 zum Messen einer Kühlmitteltemperatur (hier innerhalb des Gehäuses 101 gezeigt), einen Ausgleichsbehälter 2 zum Ausgleich einer Kühlmittelmenge in dem Kühlmittelkreislauf 150, eine Pumpe 1, die ein Kühlmittel durch den Kühlmittelkreislauf fördern kann, und einen Kühlmittelausgang 7, der an einen Kühlmittelzulaufanschluss 22a des Akkumulators 200 angeschlossen werden kann oder der mit einem nicht gezeigten Kühlmittelausgang-Gehäuseanschluss verbunden sein kann und über diesen an den Kühlmittelzulaufanschluss 22a anschließbar sein kann. Die einzelnen Elemente des Kühlmittelkreislaufs 150 sind mit Kühlmittelleitungen (in den nachfolgenden Figuren als dicke Linien gekennzeichnet) verbunden und der Temperatursensor 3 ist bspw. derart in einer nicht näher bezeichneten Kühlmittelleitung nach dem Kühlmitteleingang 6 angebracht, dass er eine Temperatur des aus dem Akkumulator 200 austretenden Kühlmittels erfasst. Der Temperatursensor 3 ist elektrisch mit der Steuereinrichtung 4 verbunden, welche die gemessene Temperatur empfängt und ein Warnsignal ausgibt, wenn diese einen vordefinierten Temperaturbereich verlässt.

Figur 2 zeigt schematisch einen Hydraulikplan des in den Figuren 1b und 1c gezeigten Kühlmittelkreislaufs 150, der die Anordnung von dessen Elementen nochmals verdeutlicht. In dem Hydraulikplan ist neben dem Kühlmittelkreislauf 150 der Überwachungsvorrichtung 100 auch ein zu überwachender Akkumulator 200 dargestellt. Der Akkumulator 200 umfasst ein Gehäuse 20 mit einem Kühlmittelzulaufanschluss 22a und einem Kühlmittelrücklaufanschluss 22b in dem eine Vielzahl von Akkumulator-/Batteriezellen 21 angeordnet sind, die von dem Kühlmittel umströmt werden.

Der Kühlmittelzulaufanschluss 22a des Akkumulators 200 ist mit dem Kühlmittelausgang 7 des Kühlmittelkreislaufs 150 der Überwachungsvorrichtung 100 verbunden (optional über einen nicht gezeigten Kühlmittelausgang-Gehäuseanschluss), und der Kühlmittelrücklaufanschluss 22b des Akkumulators 200 ist mit dem Kühlmitteleingang 6 des Kühlmittelkreislaufs 150 der Überwachungsvorrichtung 100 verbunden (optional über einen nicht gezeigten Kühlmitteleingang-Gehäuseanschluss).

Stromabwärts des Kühlmitteleingangs 6 ist in dem Kühlmittelkreislauf 150 das Ventil 5 angeordnet, welches elektrisch mit der Steuereinrichtung 4 verbunden ist, die über das Ventil 5 einen Zufluss von Kühlmittel aus dem Akkumulator 200 in den Kühlmittelkreislauf 150 der Überwachungsvorrichtung steuern kann. Beispielsweise kann das Ventil 5 von der Steuereinrichtung 4 geöffnet und geschlossen werden.

Auf das Ventil 5 folgen stromabwärts in dem Kühlmittelkreislauf 150 der Temperatursensor 3, der Ausgleichsbehälter 2 und die Pumpe 1, die stromaufwärts mit dem Kühlmittelausgang 7 des Kühlmittelkreislaufs 150 verbunden ist. Der Temperatursensor 3, der Ausgleichsbehälter 2 und die Pumpe 1 sind ebenfalls elektrisch mit der Steuereinrichtung 4 verbunden.

Die Steuereinheit 4 kann beispielsweise ein Signal von einem Füllstandsensor (nicht dargestellt) des Ausgleichsbehälters 2 erhalten und eine Warnmeldung an die Anzeigeeinheit 16 ausgeben, wenn eine vorbestimmte Füllhöhe an Kühlmittel im Ausgleichbehälter 2 unterschritten wird. Zudem kann der Ausgleichsbehälter 2 ein weiteres Ventil (nicht dargestellt) enthalten, über das Kühlmittel aus dem Ausgleichsbehälter 2 in den Kühlmittelkreislauf oder umgekehrt eingespeist werden kann. Dieses weitere Ventil kann, z. B. abhängig von der mittels des Temperatursensors 3 gemessenen Kühlmitteltemperatur, ebenfalls von der Steuereinrichtung 4 gesteuert werden. Beispielsweise kann das weitere Ventil geöffnet und Kühlmittel aus dem Ausgleichsbehälter 2 in den Kühlmittelkreislauf 150 geleitet werden, wenn die Kühlmitteltemperatur um einen vorbestimmten Wert ansteigt oder einen vorbestimmten Wert überschreitet.

Ferner kann die Steuereinrichtung 4 basierend auf der von dem Temperatursensor 3 gemessenen Kühlmitteltemperatur beispielsweise die Pumpe 1 derart steuern, dass die Kühlmitteltemperatur möglichst in einem vordefinierten Temperaturbereich verbleibt. Dies kann z.B. durch eine Drehzahlsteuerung/-regelung der Pumpe erfolgen, mittels der eine Strömungsgeschwindigkeit des durch den Kühlmittelkreislauf 150 und den Akkumulator 200 strömenden Kühlmittels eingestellt werden kann. Verlässt die Kühlmitteltemperatur den vordefinierten Temperaturbereich, so kann die Steuereinrichtung 4 wiederum eine Warnung an die Anzeigeeinheit 16 ausgeben. Auf diese Weise kann eine Temperatur eines nicht im Einsatz befindlichen Akkumulators einfach und wirkungsvoll überwacht werden.

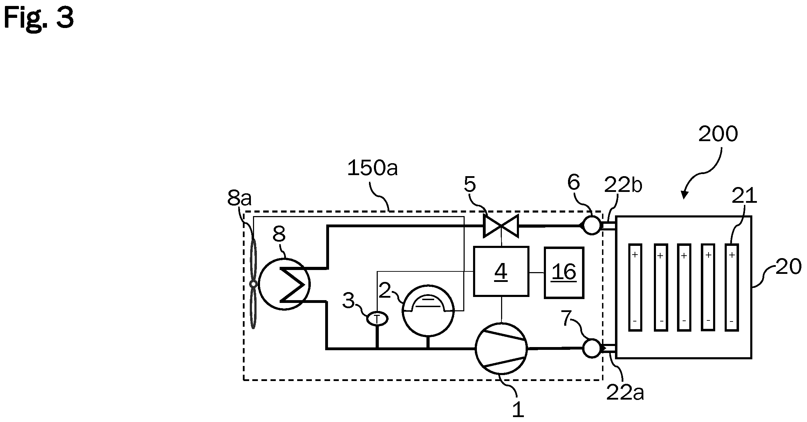

Figur 3 zeigt schematisch einen Hydraulikplan eines Kühlmittelkreislaufs 150 gemäß einem weiteren Ausführungsbeispiel der vorgestellten Überwachungsvorrichtung 100.

Der hier gezeigte Kühlmittelkreislauf 150a unterscheidet sich von dem in Figur 2 gezeigten dadurch, dass zwischen dem Ventil 5 und dem Temperatursensor 5 ein Wärmetauscher 8 angeordnet ist, über den Wärme aus dem Kühlmittelkreislauf 150 abgeführt oder diesem zugeführt werden kann. Der Wärmetauscher 8 wird auf einer Primärseite von dem Kühlmittel durchströmt und weist auf einer Sekundärseite ein Gebläse 8a auf, das von der Steuereinrichtung 4 ansteuerbar ist. Beispielsweise kann die Steuereinrichtung eine Rotationsgeschwindigkeit des Gebläses 8a, das einen Luftstrom zu dem Wärmetauscher 8 leitet, dazu genutzt werden, die Wärmeabgabe des Kühlmittels im Wärmetauschers zu verändern. Durch Einsatz des Wärmetauschers 8 mit dem Gebläse 8a kann eine Kühlleistung des Kühlmittelkreislaufs 150a gesteigert und gezielt gesteuert werden. Dadurch kann die Überwachungsvorrichtung 100 nicht nur eine Temperaturüberwachung des Akkumulators 200 bereitstellen, sondern auch als Überbrückungs-/Ersatzkühlung für diesen dienen.

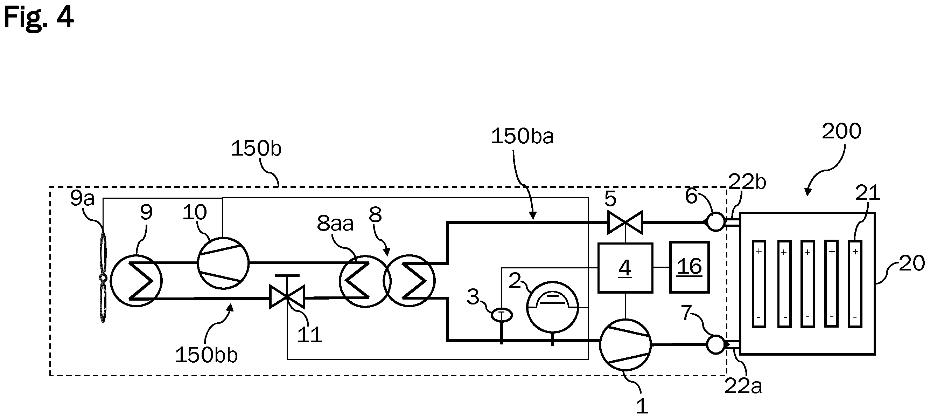

Figur 4 zeigt schematisch einen Hydraulikplan eines Kühlmittelkreislaufs 150b gemäß einem weiteren Ausführungsbeispiel der vorgestellten Überwachungsvorrichtung 100.

Der hier gezeigte Kühlmittelkreislauf 150b unterscheidet sich von dem in Figur 3 gezeigten dadurch, dass der Wärmetauscher 8 auf der Sekundärseite einen Kältekreislauf 150bb anstelle des Gebläses 8a aufweist. Somit umfasst der Kühlmittelkreislauf 150b zwei Kreisläufe, nämlich den Kühlmittelkreislauf 150ba auf der Primärseite des Wärmetauschers 8, der an den Akkumulator 200 angeschlossen ist, und den Kältekreislauf auf der Sekundarseite des Wärmetauschers 8, der mittels eines Kälteprozesses dem Kühlmittelkreislauf 150ba Wärme entziehen oder zuführen kann.

Der Kältekreislauf 150bb umfasst einen Verdampfer 8aa, der auf der Sekundärseite des Wärmetauschers 8 ein Kältemittel (die Wahl des Mittels ist fachüblich) verdampfen und somit dem Kühlmittel auf der Primärseite des Wärmetauschers 8 Wärme entziehen kann. Des Weiteren enthält der Kältekreislauf 150bb einen Kompressor 10, der das verdampfte Kältemittel auf ein vorbestimmtes Druckniveau komprimieren kann, das höher als das Druckniveau im Verdampfer ist, einen Kondensator 9, in dem das verdichtete Kältemittel kondensiert werden und dabei die aufgenommene Wärme wieder abgeben kann, und ein Expansionsventil, mittels dem das Kältemittel wieder entspannt und gezielt zur erneuten Verdampfung dem Verdampfer 8aa zugeführt werden kann. Der gezeigte Kondensator 9 hat auf seiner Sekundärseite ein Gebläse 9a, mittels dessen die Wärmeabgabe an die Umgebung gesteuert/geregelt werden kann. Dazu ist dieser, wie auch der Kompressor 9 und das Expansionsventil 11, elektrisch mit der Steuereinheit 4 verbunden, die den Kältekreislauf in bekannter Art und Weise steuert.

Der Einsatz des Kältekreislaufs 150bb anstelle des Gebläses 8a ermöglicht es die Kühlleistung des Kältekreislaufs 150b nochmals zu erhöhen und somit eine noch wirkungsvollere Überbrückungs-/Ersatzkühlung für den Akkumulator 200 darzustellen.

Wird der Kältekreis 150bb zusätzlich mit einem Vierwegeventil (nicht dargestellt) und einer entsprechenden Leitungsführung versehen, so kann eine Kältekreisumkehr erfolgen und der Kondensator 9 als Verdampfer und der Verdampfer 8aa als Kondensator eingesetzt werden. Auf diese Weise kann dem Kühlmittelkreislauf 150ba bei Bedarf auch Wärme zugeführt werden.

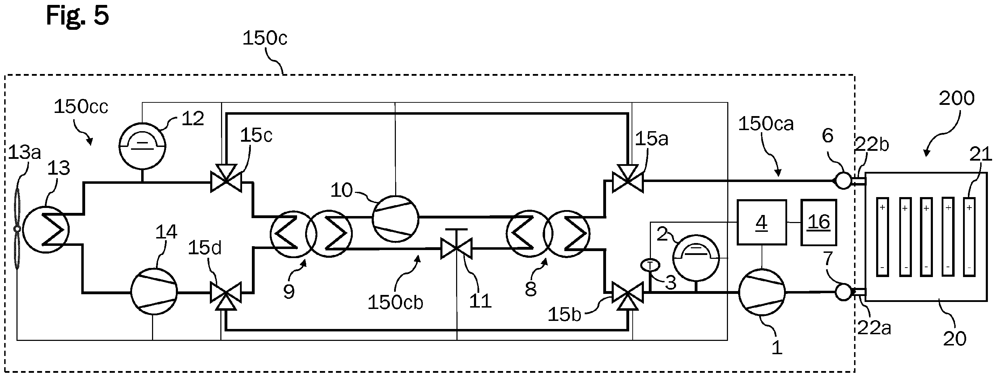

Figur 5 zeigt schematisch einen Hydraulikplan eines Kühlmittelkreislaufs 150c gemäß einem weiteren Ausführungsbeispiel der vorgestellten Überwachungsvorrichtung 100.

Der hier gezeigte Kühlmittelkreislauf 150b unterscheidet sich von dem in Figur 4 gezeigten dadurch, dass der Kondensator 9 des Kältekreislaufs 150cb auf seiner Sekundärseite einen weiteren Kühlmittelkreislauf 150cc aufweist. Der hier gezeigte Kühlmittelkreislauf 150c umfasst somit drei Kreisläufe, nämlich einen ersten Teil-Kühlmittelkreislauf 150ca, der an den Akkumulator 200 angeschlossen ist, den Kältekreislauf 150cb auf der Sekundärseite des Wärmetauschers 8 des ersten Teil-Kühlmittelkreislaufs 150ca und einen zweiten Teil-Kühlmittelkreislauf 150cc auf der Sekundärseite des Kondensators 9 des Kältekreislaufs 150cb. Der zweite Teil-Kühlmittelkreislauf 150cc umfasst einen weiteren Ausgleichsbehälter 14, einen weiteren Wärmetauscher 13 mit einem Gebläse 13a sowie eine weitere Pumpe 14 und ist in dem dargestellten Beispiels mittels vier Dreiwegeventilen an den Kältekreislauf 150cb und den ersten Teil-Kühlmittelkreislauf 150ca angeschlossen. Diese erlauben es, den Kältekreislauf zu umgehen und den zweiten Teil-Kühlmittelkreislauf 150cc direkt mit dem ersten Teil-Kühlmittelkreislauf 150ca zu verbinden.

Der Kühlmittelkreislauf 150c ermöglicht durch den zweiten Teil-Kühlmittelkreislauf 150cc eine weitere Verbesserung der Kühlleistung der Überwachungsvorrichtung sowie eine flexible Umschaltung zwischen einem einfachen Kühlmittelkreislauf mit Wärmetauscher 13 und Gebläse 13a und einem zusätzlichen Kältekreislauf 150cb mit einem effizienten Flüssigkeits-Wärmetauscher als Kondensator 9.

Figuren 6a und 6b zeigen schematisch den Kühlmittelkreislauf gemäß dem in Figur 6 gezeigten Hydraulikplan jeweils in einer perspektivischen Ansicht von zwei gegenüberliegenden Seiten. Der Kühlmittelkreislauf 150c ist auf einer Grundplatte 102 montiert, die in das in Figur 1a gezeigte Gehäuse 101 integriert werden kann. Auf der Grundplatte 102 sind der Verdampfer 8, der Kondensator 9 sowie der Kompressor 10 des Kältekreislaufs 150cb und die beiden Pumpen 1, 14 der beiden Teil-Kühlmittelkreisläufe 150ca und 150cc angeordnet. Die Teil-Kühlmittelkreisläufe 150ca und 150cc sind bevorzugt mit nicht näher bezeichneten flexiblen Kühlmittelleitungen ausgeführt und die Elemente des Kältekreislauf 150cb sind bevorzugt mit nicht näher bezeichneten starren Leitungen, z.B. aus Edelstahl, miteinander verbunden.

In vertikaler Richtung oberhalb des Kondensators 9 und des Kompressors 10 sind an einem Rahmen 102a die Dreiwegeventile 15a-d angebracht, mittels derer der Kältekreislauf 150cb umgangen werden kann. In Verlängerung einer Stirnseite des Rahmens 102a erstreckt sich eine Platte 102b an der die Steuereinrichtung 4 befestigt ist. Auf einer gegenüberliegenden Seite der Platte 102b ist der Ausgleichsbehälter 2, 12 angeordnet, der zum Kühlmittelausgleich beider Teil-Kühlmittelkreisläufe 150ca und 150cc dient. An den Ausgleichsbehälter 2, 12 schließt sich in Haupterstreckungsrichtung der Grundplatte 102 der Wärmetauscher 13 mit dem Gebläse 13a an.

Anhand der Figuren 6a und 6b wird deutlich, dass selbst der Kühlmittelkreislauf 150c, der zwei Teil-Kühlkreisläufe 150ca, 150cc und einen Kältekreislauf 150cb umfasst, sehr kompakt aufgebaut ist. Durch diesen kompakten Aufbau können Größe und Gewicht der Überwachungsvorrichtung 100 begrenzt werden, wodurch auch bei hoher Kühlleistung ein mobiler Einsatz der Überwachungsvorrichtung 100 möglich ist.

Zusammenfassend bietet die zuvor beschriebene Überwachungsvorrichtung 100 eine technisch wenig komplexe und sicherheitsrelevante Lösung an, um einen Akkumulator 200, der nicht an eine aktive Kühlung, z.B. eines Fahrzeugs, angeschlossen ist, zu überwachen und eine Brandgefahr bzw. Überhitzungsgefahr zu melden. Der angeschlossene Kühlmittelkreislauf 150, 150a, 150b, 150c der Überwachungsvorrichtung 100 kann ferner als Überbrückungs-/Ersatzkühlung herangezogen werden, so dass der Akkumulator 200 beispielsweise auch bei Lagerung oder Transport temperaturgeregelt betrieben werden kann.

## Patentansprüche

1. Vorrichtung zur Überwachung eines kühlmittelgekühlten Akkumulators, der in einem Akkumulatorgehäuse angeordnet ist, das zumindest einen Kühlmittelzulaufanschluss und einen Kühlmittelrücklaufanschluss aufweist, wobei die Überwachungsvorrichtung (100) umfasst:
ein Gehäuse (101), und
einen Kühlmittelkreislauf (150, 150a, 150b, 150c) mit Kühlmitteleitungen zum Transportieren eines Kühlmittels, zumindest einem Temperatursensor (3) und zumindest einer Steuereinrichtung (4), wobei
der Temperatursensor (3) derart angeordnet ist, dass der Temperatursensor (3) die Kühlmitteltemperatur des aus dem Akkumulator (200) austretenden Kühlmittels erfasst, und
die Steuereinrichtung (4) dazu eingerichtet ist, eine Warnmeldung basierend auf der von dem Temperatursensor (3) erfassten Kühlmitteltemperatur auszugeben, wenn die Kühlmitteltemperatur außerhalb eines vordefinierten Temperaturbereiches ist.

2. Vorrichtung gemäß Patentanspruch 1, wobei die Steuereinrichtung (4) eine Warnmeldung ausgibt, falls die Kühlmitteltemperatur oberhalb und/oder unterhalb des vordefinierten Temperaturbereiches liegt.

3. Vorrichtung gemäß Patentanspruch 1 oder 2, wobei die Steuereinrichtung (4) eine Warnmeldung ausgibt, falls die Kühlmitteltemperatur für zumindest zwei hintereinander folgenden Temperaturmesswerten oberhalb und/oder unterhalb des vordefinierten Temperaturbereiches liegt,
und/oder
wobei die Steuereinrichtung (4) eine Warnmeldung ausgibt, falls die Kühlmitteltemperatur für zumindest eine vorbestimmte Zeitdauer oberhalb und/oder unterhalb des vordefinierten Temperaturbereiches liegt.

4. Vorrichtung gemäß zumindest einem der vorstehenden Patentansprüche, wobei das Gehäuse (101) zumindest einen Kühlmittelausgang-Gehäuseanschluss zum Verbinden der Kühlmittelleitungen des Kühlmittelkreislaufes (150, 150a, 150b, 150c) mit einem Kühlmittelzulaufanschluss (22a) des Akkumulators (200) und einen Kühlmitteleingang-Gehäuseanschluss zum Verbinden der Kühlmittelleitungen des Kühlmittelkreislaufes mit einem Kühlmittelrücklaufanschluss (22b) des Akkumulators (200) aufweist.

5. Vorrichtung gemäß Patentanspruch 4, wobei mehr als ein Kühlmittelausgang-Gehäuseanschluss und mehr als ein Kühlmitteleingang-Gehäuseanschluss zum Verbinden der Kühlmittelleitungen von mehr als einem Akkumulator (200) an dem Gehäuse (101) angeordnet sind oder der Kühlmittelausgang-Gehäuseanschluss und der Kühlmitteleingang-Gehäuseanschluss jeweils eine Verzweigungselement aufweisen, so dass mehr als ein Akkumulator (200) an dem Gehäuse (101) anschließbar ist.

6. Vorrichtung gemäß zumindest einem der vorstehenden Patentansprüche, wobei der Kühlmittelkreislauf (150, 150a, 150b, 150c) innerhalb des Gehäuses (101) angeordnet ist, und/oder
wobei der Kühlmittelkreislauf (150, 150a, 150b, 150c) zumindest einen Wärmetauscher (8) umfasst, der auf einer Primärseite von dem Kühlmittel durchströmt ist.

7. Vorrichtung gemäß zumindest einem der voranstehenden Patentansprüche, wobei der Kühlmittelkreislauf (150, 150a, 150b, 150c) einen Ausgleichsbehälter (2) für Kühlmittel aufweist, in den Kühlmittel aus dem Kühlmittelkreislauf (150, 150a, 150b, 150c) einspeisbar ist oder aus dem Kühlmittel in den Kühlmittelkreislauf (150, 150a, 150b, 150c) einspeisbar ist.

8. Vorrichtung gemäß zumindest einem der voranstehenden Patentansprüche, wobei der Wärmetauscher (8) auf einer Sekundärseite eine Temperiereinrichtung aufweist, die von der Steuereinrichtung (4) ansteuerbar ist und die Steuereinrichtung (4) dazu eingerichtet ist, basierend auf den Kühlmitteltemperaturmesswerten, die Temperiereinrichtung derart anzusteuern, dass sich eine Kühlmitteltemperatur verändert, wobei
die Temperiereinrichtung bevorzugt ein Gebläse (13a) und/oder einen Kältekreislauf (150bb) umfasst.

9. Vorrichtung gemäß Anspruch 8, wobei der Kältekreislauf (150bb) dazu eingerichtet ist, Wärme mit einer Umgebung oder mit einem weiteren Kühlmittelkreislauf auszutauschen.

10. Vorrichtung gemäß zumindest einem der voranstehenden Patentansprüche, wobei die Vorrichtung eine Anzeigeeinheit (16) aufweist, die an dem Gehäuse (101) angeordnet ist und die Anzeigeeinheit (16) dazu eingerichtet ist, die Warnmeldung der Steuereinrichtung (4) auszugeben, wobei
die Anzeigeeinheit (16) bevorzugt einen Touch-Bildschirm aufweist, über den die Vorrichtung konfiguriert werden kann.

11. Vorrichtung gemäß zumindest einem der voranstehenden Patentansprüche, wobei das Gehäuse (101) einen elektrischen Stromanschluss zur elektrischen Versorgung der Steuerung (4) und des Kühlmittelkreislaufes (150, 150a, 150b, 150c) aufweist und/oder innerhalb des Gehäuses (101) ein Vorrichtungsakkumulator angeordnet ist.

12. Vorrichtung gemäß zumindest einem der voranstehenden Patentansprüche, wobei das Gehäuse (101) Fahrrollen aufweist und/oder das Gehäuse (101) Transportanschlüsse aufweist, mit denen das Gehäuse (101) angehoben werden kann.

13. Überwachungs- und Kühlsystem umfassend eine Vorrichtung gemäß zumindest einem der voranstehenden Patentansprüche und einen kühlmittelgekühlten Akkumulator (200), der in einem Akkumulatorgehäuse (20) angeordnet ist, das zumindest einen Kühlmittelzulaufanschluss (22a) und einen Kühlmittelrücklaufanschluss (22b) aufweist, wobei der Kühlmittelzulaufanschluss (22a) des Akkumulators (200) fluidisch mit dem Kühlmittelausgang-Gehäuseanschluss oder dem Kühlmittelausgang (7) der Vorrichtung verbunden ist und der Kühlmittelrücklaufanschluss (22b) des Akkumulators (200) fluidisch mit dem Kühlmitteleingang-Gehäuseanschluss oder dem Kühlmitteleingang (6) der Vorrichtung verbunden ist.

14. Überwachungs- und Kühlsystem gemäß Patentanspruch 13, wobei der Akkumulator (200) ein Akkumulator (200) eines Kraftfahrzeuges ist.

15. Überwachungs- und Kühlsystem gemäß Patentanspruch 13 oder 14, wobei mehr als ein Akkumulator (200) parallel zueinander oder in Reihe zueinander geschaltet an der Überwachungsvorrichtung (100) angeschlossen ist.
